# EUROPEAN PATENT SPECIFICATION

(11) **EP 3 825 960 B1**
(45) Date of publication and mention of the grant of the patent: **04.06.2025**
(21) Application number: 20171472.2
(22) Date of filing: 27.04.2020
(51) Int. Cl.: G06T 7/70

(54) **METHOD AND DEVICE FOR OBTAINING LOCALIZATION INFORMATION**
VERFAHREN UND VORRICHTUNG ZUR GEWINNUNG VON LOKALISIERUNGSINFORMATIONEN
PROCÉDÉ ET DISPOSITIF PERMETTANT D'OBTENIR DES INFORMATIONS DE LOCALISATION

(30) Priority: 22.11.2019 CN 201911158676
(43) Date of publication of application: 26.05.2021
(73) Proprietor: Beijing Xiaomi Mobile Software Co., Ltd., Beijing 100085 (CN)
(72) Inventor: ZANG, Yutong, Beijing, Beijing 100085 (CN)
(74) Representative: dompatent von Kreisler Selting Werner - Partnerschaft von Patent- und Rechtsanwälten mbB

(56) References cited:
- GUOLAI JIANG ET AL: "A Simultaneous Localization and Mapping (SLAM) Framework for 2.5D Map Building Based on Low-Cost LiDAR and Vision Fusion", APPLIED SCIENCES, vol. 9, no. 10, 22 May 2019 (2019-05-22), pages 2105, XP055740701, DOI: 10.3390/app9102105
- RAUL MUR-ARTAL ET AL: "ORB-SLAM2: an Open-Source SLAM System for Monocular, Stereo and RGB-D Cameras", ARXIV.ORG, CORNELL UNIVERSITY LIBRARY, 201 OLIN LIBRARY CORNELL UNIVERSITY ITHACA, NY 14853, 19 June 2017 (2017-06-19), XP081672901, DOI: 10.1109/TRO.2017.2705103
- YUAN WANG ET AL: "RGB-D sensor-based visual SLAM for localization and navigation of indoor mobile robot", 2016 INTERNATIONAL CONFERENCE ON ADVANCED ROBOTICS AND MECHATRONICS (ICARM), IEEE, 18 August 2016 (2016-08-18), pages 82 - 87, XP032985649, DOI: 10.1109/ICARM.2016.7606899

## Description

### TECHNICAL FIELD

The present disclosure relates to the field of visual localization technology, and particularly to a method and device for obtaining localization information, and a corresponding computer-readable storage medium.

### BACKGROUND

Visual localization technology refers to accomplishment of localization tasks through machine vision, which is a research hotspot in the fields of AR technology and mobile robots in recent years. On the one hand, many mobile phone manufacturers realize AR (Augmented Reality) functions in some mobile phones by using cameras of the mobile phones and visual localization algorithms, but due to the limited accuracy of the existing localization technologies, AR applications in the mobile phones are restricted, and thus mobile phone manufacturers are committed to the research of visual localization. On the other hand, due to advantages of machine vision with respect to traditional laser sensors, some mobile robot companies are also investing in the research and development of visual localization in order to solve existing problems.

Document entitled "A Simultaneous Localization and Mapping (SLAM) Framework for 2.50 Map Building Based on Low-Cost LiDAR and Vision Fusion" provides a new graph optimization-based SLAM framework through the combination of low-cost LiDAR sensor and vision sensor.

### SUMMARY

The invention is set out in the appended set of claims. The present disclosure provides a method and a device for obtaining localization information and a corresponding computer-readable storage medium, to solve the existing problems in the related technologies and to improve robustness of visual localization in the actual environment.

This summary is provided to introduce a selection of aspects of the present disclosure in a simplified form that are further described below in the detailed description. This summary is not intended to identify key features or essential features of the claimed subject matter, nor is it intended to be used to limit the scope of the claimed subject matter.

According to a first aspect of the present disclosure, a method for obtaining localization information is provided according to claim 1. Optional features are set out in dependent claims 2 to 3.

According to a second aspect of the present disclosure, a device for obtaining localization information is provided according to claim 4. Optional features are set out in dependent claims 5 to 6.

According to a third aspect of the embodiments of the present disclosure, a device for obtaining localization information is provided according to claim 7.

According to a fourth aspect of the embodiments of the present disclosure, a non-transitory computer-readable storage medium is provided according to claim 8.

According to technical solutions provided in the embodiments of the present disclosure, three-dimensional coordinates of spatial obstacle points are obtained based on the depth map, environmental three-dimensional coordinates corresponding to each of the estimated target postures are obtained based on the relocation postures, the relocation variance and the point cloud map, and the three-dimensional coordinates of the spatial obstacle points are scanned and matched with the environmental three-dimensional coordinates corresponding to each of the estimated target postures to determine whether the relocation postures are available, and then localization information is obtained, all of which are implemented by using the existing localization device, without the need of additional hardware sensing devices or changing the main structure of the visual localization system. Through the above methods, the problem of weak localization robustness caused by the high dependence of the relocation module on the visual algorithm in the existing visual localization system is solved, and the localization robustness is improved.

It is to be noted that if additional sensors are added to the visual localization system, it is also possible to solve the above problems, such as adding laser sensors for algorithm fusion, or using a coded disc installed on the robot body for algorithm fusion in the field of use of a ground mobile robot. However, these solutions for adding external sensors have no advantages in terms of cost, power consumption and size. The methods provided in the disclosure do not need to add additional hardware sensor devices, but to add parallel modules, such that the problem of localization errors of the relocation module in the actual operation of the visual localization system is solved, thereby improving the robustness of the visual localization system in the actual environment.

It is to be understood that the above general description and the following detailed description below are merely exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the present disclosure.
FIG. 1 is a schematic diagram of a relocation process in the existing visual localization.
FIG. 2 is a flowchart illustrating a method for obtaining localization information according to an exemplary embodiment of the disclosure.
FIG. 3 is a flowchart illustrating the operations of obtaining target postures and environmental three-dimensional coordinates corresponding to each of the target postures based on relocation postures, a relocation variance and a point cloud map according to an exemplary embodiment of the disclosure.
FIG. 4 is a flowchart illustrating the operations of obtaining target postures and environmental three-dimensional coordinates corresponding to each of the target postures based on relocation postures, a relocation variance and a point cloud map according to an exemplary embodiment of the disclosure.
FIG. 5 is a flowchart illustrating the operations of scanning and matching three-dimensional coordinates of spatial obstacle points with environmental three-dimensional coordinates to obtain matching result information and obtaining localization information based on relocation postures and a relocation variance when the matching result information satisfies a predetermined condition, according to an exemplary embodiment of the disclosure.
FIG. 6 is a flowchart illustrating the operations of obtaining a matching score of each particle by scanning and matching three-dimensional coordinates of spatial obstacle points with environmental three-dimensional coordinates of each particle according to an exemplary embodiment of the disclosure.
FIG. 7 is a flowchart illustrating a method for obtaining localization information according to an exemplary embodiment of the disclosure.
FIG. 8 is a block diagram illustrating a device for obtaining localization information according to an exemplary embodiment of the disclosure.
FIG. 9 is a block diagram illustrating a device according to an exemplary embodiment of the disclosure.
FIG. 10 is a block diagram of a device according to an exemplary embodiment of the disclosure.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

At present, there are several visual localization technical solutions. For the convenience of description, the technical solutions of the present disclosure will be described by taking visual SLAM (simultaneous localization and mapping) technology as an example.

From the perspective of visual sensors, visual SLAM mainly includes monocular + IMU SLAM, binocular SLAM and RGBD-SLAM. These three types of visual SLAM have different three-dimensional visual calculation methods, but due to requirements of the visual SLAM, the framework components of the whole visual SLAM are basically the same, including front-end optimization and back-end optimization, which are divided into four main modules: a localization module, a mapping module, a relocation module and a closed-loop module. These four modules are used to accomplish the tasks of SLAM. As a method for correcting localization errors in the visual system, the relocation module is very important to improve the robustness of the visual localization system. However, in the navigation and localization of many actual scenes, the relocation algorithm may fail due to the similar distribution of feature points in the visual system, which not only cannot correct the wrong localization, but also easily leads to the wrong localization. Once the wrong localization occurs, the entire existing visual SLAM system will fail.

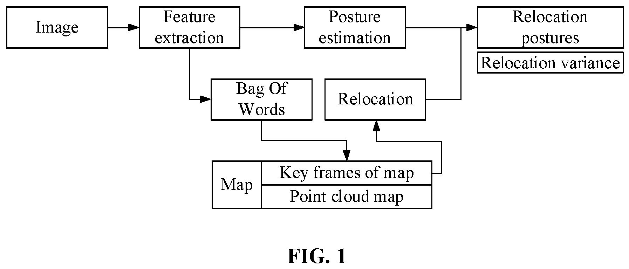

FIG. 1 illustrates a schematic diagram of a relocation process in the existing visual localization, in which a relocation module takes image features as an input, outputs postures after relocation and optimizes posture estimation of the system. The existing visual localization has been discussed in the documents https://en.wikipedia.org/wiki/Simultaneous_localization_and_mapping or http://webdiis.unizar.es/~raulmur/orbslam/.

The relocation module is introduced in order to solve the problem of cumulative error of posture estimation. However, due to the complex scenes in reality, the algorithm (such as Bag Of Words) and the heuristic selection rule for key frames adopted by the relocation module are difficult to ensure that the key frames have a good distribution in space while all the key-frame feature vectors have strong discrimination. This results in a probability that the relocation module gives a wrong posture in practice, which will lead to the localization error, and further, this error cannot be eliminated by the visual SLAM system itself until the next correct relocation, which leads to the localization error of the visual SLAM.

The present disclosure provides a method for obtaining localization information. On the basis of the existing visual localization system, a processing module, parallel with the relocation module, is added to determine whether an output posture of the relocation module is correct, so as to improve the robustness of the visual localization.

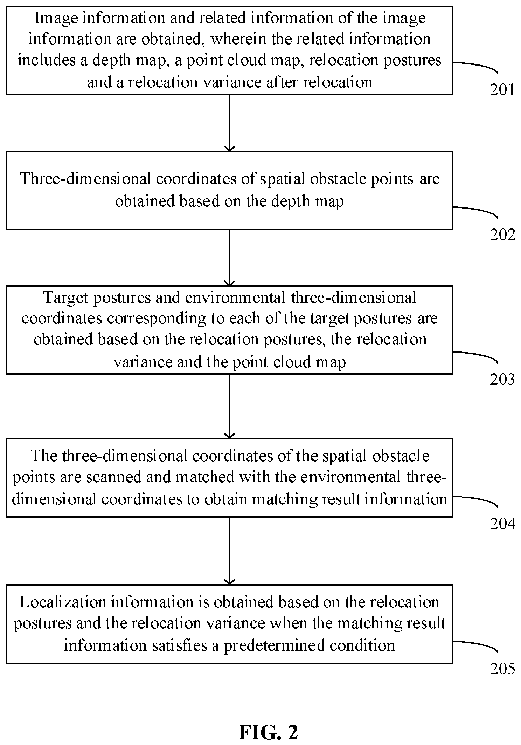

The present disclosure provides a method for obtaining localization information. As illustrated in FIG. 2, the method includes the following operations.

In 201, image information and related information of the image information are obtained, wherein the related information includes a depth map, a point cloud map, relocation postures and a relocation variance after relocation.

In 202, three-dimensional coordinates of spatial obstacle points are obtained based on the depth map.

In 203, target postures and environmental three-dimensional coordinates corresponding to each of the target postures are obtained based on the relocation postures, the relocation variance and the point cloud map.

In 204, the three-dimensional coordinates of the spatial obstacle points are scanned and matched with the environmental three-dimensional coordinates to obtain matching result information.

In 205, localization information is obtained based on the relocation postures and the relocation variance when the matching result information satisfies a predetermined condition.

In 201, the image information during localization illustrated in FIG. 1 is obtained. The image information may be a frame of image. The point cloud map is obtained by processing the frame of image, and relocation postures and relocation variance corresponding to the relocation postures are obtained based on relocation of the frame of image. The point cloud map, the relocation postures and the relocation variance are illustrated in FIG. 1. In addition, the depth map obtained corresponds to the frame of image, that is, the frame of image and its corresponding depth map are both taken at the same time for the same scene.

The depth map in 201 refers to a dense depth map. The binocular visual device and the RGBD visual device can directly output the dense depth map information. The monocular + IMU visual device can process a sparse depth map to obtain the dense depth map, but due to the limited image quality, the method of the present disclosure is not suitable for the monocular + IMU visual device.

In 202, the three-dimensional coordinates of spatial obstacle points obtained based on the depth map may also be calculated by the camera formula. This calculation process is known to those skilled in the art, which will not be elaborated herein.

In 203, the operation of obtaining target postures and environmental three-dimensional coordinates corresponding to each of the target postures based on the relocation postures, the relocation variance and the point cloud map may include: obtaining the target postures based on the relocation postures and the relocation variance, wherein the target postures are represented by particles, and obtaining the environmental three-dimensional coordinates corresponding to the target postures through the particles and the point cloud map. The specific process will be described in the following specific embodiments.

In 204 and 205, the environmental three-dimensional coordinates corresponding to each of the target postures can be matched with the three-dimensional coordinates of spatial obstacle points by a manner of scan matching, and a matching score can be calculated. The highest matching score might be determined from the matching scores of these target postures. In this case, the matching result information may be a matching score of each target posture, and the predetermined condition may be the condition whether the highest matching score exceeds a predetermined threshold. The predetermined threshold may be preset by a user or obtained in advance through offline experiments according to a specific application scene, which will not be limited in the disclosure. If the highest matching score meets the requirement of exceeding the predetermined threshold, it might be determined that the relocation posture is correct. If the highest matching score does not meet the threshold requirement, it might be determined that the relocation posture is wrong, and the result of the relocation is not be used.

The above method can guarantee accuracy of output postures of the relocation, such that the problem of the wrong posture result given by the relocation module is solved, thereby improving the robustness of the visual localization.

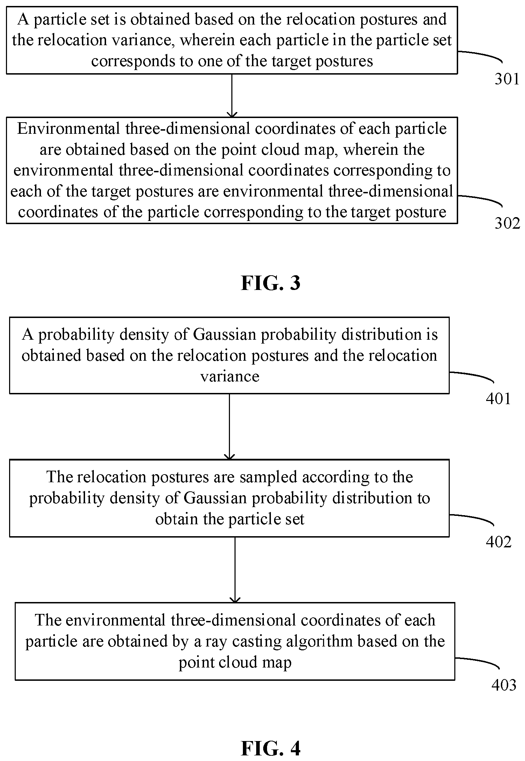

As a refinement and extension of the embodiment illustrated in FIG. 2, one embodiment of the disclosure discloses another localization method. Referring to FIG. 3, FIG. 3 is a flowchart illustrating the operations of obtaining target postures and environmental three-dimensional coordinates corresponding to each of the target postures based on the relocation postures, the relocation variance and the point cloud map. As illustrated in FIG. 3, the operation in 203 of FIG. 2 may further include the following actions.

In 301, a particle set is obtained based on the relocation postures and the relocation variance, wherein each particle in the particle set corresponds to one of the target postures.

In 302, environmental three-dimensional coordinates of each particle are obtained based on the point cloud map, wherein the environmental three-dimensional coordinates corresponding to each of the target postures are environmental three-dimensional coordinates of the particle corresponding to the target posture.

In 301, the operation of obtaining the particle set based on the relocation postures and the relocation variance may specifically use the method of constructing Gaussian probability distribution, Kalman filter or Bayesian estimation. The calculation process is known to those skilled in the art, which will not be elaborated herein.

In 302, the environmental three-dimensional coordinates of each particle are coordinates of the point cloud map projected into the coordinate system corresponding to each target posture (particle).

As a refinement and extension of the embodiment illustrated in FIG. 3, the embodiment of the disclosure discloses another localization method. Referring to FIG. 4, FIG. 4 is a flowchart illustrating the operations of obtaining target postures and environmental three-dimensional coordinates corresponding to each of the target postures based on the relocation postures, the relocation variance and the point cloud map. As illustrated in FIG. 4, the operation of obtaining the particle set based on the relocation postures and the relocation variance in 301 of FIG. 3 may further include the following actions.

In 401, a probability density of Gaussian probability distribution is obtained based on the relocation postures and the relocation variance.

In 402, the relocation postures are sampled according to the probability density of Gaussian probability distribution to obtain the particle set.

The operation of obtaining the environmental three-dimensional coordinates of each particle based on the point cloud map in 302 of FIG. 3 may further include the following action.

In 403, the environmental three-dimensional coordinates of each particle are obtained by a ray casting algorithm based on the point cloud map.

In 401 and 402, the target postures are obtained through the probability density of Gaussian probability distribution, i.e., the particle set is obtained. The use of the Gaussian probability distribution is due to the case that the Gaussian distribution has a faster calculation speed without dealing with complex Jacobian matrix operations and is also easy to model.

In 403, the point cloud map and each particle are used to calculate the environmental three-dimensional coordinates of the corresponding particle by the ray casting algorithm. The method adopted by the ray casting algorithm is known to those skilled in the art, which will not be elaborated herein.

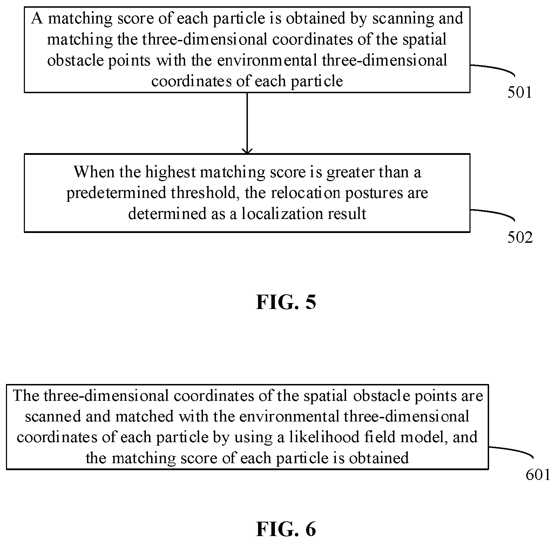

As a refinement and extension of the embodiment illustrated in FIG. 2, the embodiment of the disclosure discloses another localization method. Referring to FIG. 5, FIG. 5 is a flowchart illustrating the operations of scanning and matching the three-dimensional coordinates of the spatial obstacle points with the environmental three-dimensional coordinates to obtain matching result information and obtaining localization information based on the relocation postures and the relocation variance when the matching result information satisfies a predetermined condition. As illustrated in FIG. 5, the operations in 204 and 205 of FIG. 2 may further include the following actions.

In 501, a matching score of each particle is obtained by scanning and matching the three-dimensional coordinates of the spatial obstacle points with the environmental three-dimensional coordinates of each particle.

In 502, when the highest matching score is greater than a predetermined threshold, the relocation postures are determined as a localization result.

In this embodiment, the environmental three-dimensional coordinates of each particle are environmental three-dimensional coordinates of the target posture corresponding to the particle obtained based on the point cloud map, and the matching score of each particle may be obtained by scanning and matching these two kinds of three-dimensional coordinates. If the matching score of any particle is greater than a predetermined threshold, it is determined that the relocation posture is correct. Therefore, the highest matching score is selected to determine whether the highest matching score is greater than a predetermined threshold. The predetermined threshold may be obtained in advance through offline experiments according to a specific application scene. In another example, the predetermined threshold may be preset by a user.

As a refinement and extension of the embodiment illustrated in FIG. 5, the embodiment of the disclosure discloses another localization method. Referring to FIG. 6, FIG. 6 is a flowchart illustrating the operations of obtaining a matching score of each particle by scanning and matching the three-dimensional coordinates of the spatial obstacle points with the environmental three-dimensional coordinates of each particle. As illustrated in FIG. 6, the operation in 501 of FIG. 5 may further include the following action.

In 601, the three-dimensional coordinates of the spatial obstacle points are scanned and matched with the environmental three-dimensional coordinates of each particle by using a likelihood field model, and the matching score of each particle is obtained.

When the scan matching algorithm is performed, the matching scores of the particles are calculated by using a likelihood field model. The matching algorithm and the likelihood field model may be in a manner known to those skilled in the art, which will not be elaborated herein.

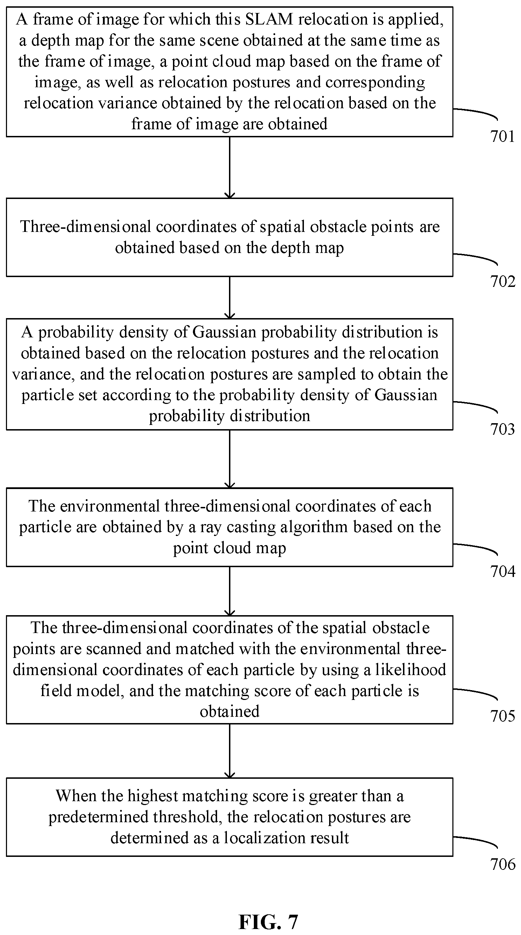

FIG. 7 illustrates a specific embodiment according to the present disclosure. In the embodiment, the localization information is obtained based on the result of SLAM relocation. The method of this specific embodiment includes the following operations.

In 701, a frame of image for which this SLAM relocation is applied, a depth map for the same scene obtained at the same time as the frame of image, a point cloud map based on the frame of image, as well as relocation postures and corresponding relocation variance obtained by the relocation based on the frame of image are obtained.

In 702, three-dimensional coordinates of spatial obstacle points are obtained based on the depth map.

In 703, a probability density of Gaussian probability distribution is obtained based on the relocation postures and the relocation variance, and the relocation postures are sampled to obtain the particle set according to the probability density of Gaussian probability distribution.

In 704, the environmental three-dimensional coordinates of each particle are obtained by a ray casting algorithm based on the point cloud map.

In 705, the three-dimensional coordinates of the spatial obstacle points are scanned and matched with the environmental three-dimensional coordinates of each particle by using a likelihood field model, and the matching score of each particle is obtained.

In 706, when the highest matching score is greater than a predetermined threshold, the relocation postures are determined as a localization result. When the highest matching score is less than or equal to the predetermined threshold, the relocation postures are not used.

It can be seen from the above specific embodiments, three-dimensional coordinates of spatial obstacle points are obtained based on the depth map, environmental three-dimensional coordinates corresponding to each of the estimated target postures are obtained based on the relocation postures, the relocation variance and the point cloud map, and the three-dimensional coordinates of the spatial obstacle points are scanned and matched with the environmental three-dimensional coordinates corresponding to each of the estimated target postures to determine whether the relocation postures are available, and then localization information is obtained, all of which are implemented by using the existing localization device, without the need of additional hardware sensing devices or changing the main structure of the visual localization system. Through the above methods, the problem of weak localization robustness caused by the high dependence of the relocation module on the visual algorithm in the existing visual localization system is solved, and the localization robustness is improved.

It is to be noted that if additional sensors are added to the visual localization system, it is also possible to solve the above problems, such as adding laser sensors for algorithm fusion, or using a coded disc installed on the robot body for algorithm fusion in the field of use of a ground mobile robot. However, these solutions for adding external sensors have no advantages in terms of cost, power consumption and size. The methods provided in the disclosure are not required to add additional hardware sensor devices, but to add parallel modules, such that the problem of localization errors of the relocation module in the actual operation of the visual localization system is solved, thereby improving the robustness of the visual localization system in the actual environment.

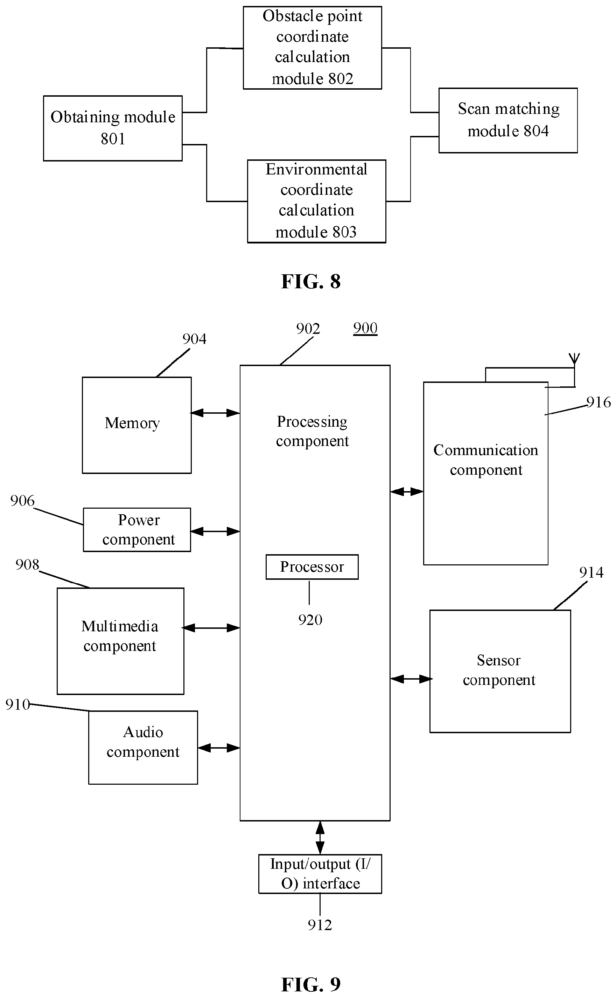

The present disclosure also provides a device for obtaining localization information. As illustrated as FIG. 8, the device includes an obtaining module 801, an obstacle point coordinate calculation module 802, an environmental coordinate calculation module 803 and a scan matching module 804.

The obtaining module 801 is configured to obtain image information and related information of the image information. The related information includes a depth map, a point cloud map, relocation postures and a relocation variance after the relocation.

The obstacle point coordinate calculation module 802 is configured to obtain three-dimensional coordinates of spatial obstacle points based on the depth map.

An environmental coordinate calculation module 803 is configured to obtain target postures and environmental three-dimensional coordinates corresponding to each of the target postures based on the relocation postures, the relocation variance and the point cloud map.

The scan matching module 804 is configured to scan and match the three-dimensional coordinates of the spatial obstacle points with the environmental three-dimensional coordinates to obtain matching result information, and obtain localization information based on the relocation postures and the relocation variance when the matching result information satisfies a predetermined condition.

In an optional embodiment, the environmental coordinate calculation module 803 is further configured to:
obtain a particle set based on the relocation postures and the relocation variance, wherein each particle in the particle set corresponds to one of the target postures; and
obtain environmental three-dimensional coordinates of each particle based on the point cloud map, wherein the environmental three-dimensional coordinates corresponding to each of the target postures are environmental three-dimensional coordinates of the particle corresponding to the target posture.

In an optional embodiment, the environmental coordinate calculation module 803 is further configured to:
obtain a probability density of Gaussian probability distribution based on the relocation postures and the relocation variance;
sample the relocation postures to obtain the particle set according to the probability density of Gaussian probability distribution; and
obtain the environmental three-dimensional coordinates of each particle by a ray casting algorithm based on the point cloud map.

In an optional embodiment, the scan matching module 804 is further configured to:
obtain a matching score of each particle by scanning and matching the three-dimensional coordinates of the spatial obstacle points with the environmental three-dimensional coordinates of each particle; and
determine, when the highest matching score is greater than a predetermined threshold, the relocation postures as the localization result.

In an optional embodiment, the scan matching module 804 is further configured to:
scan and match the three-dimensional coordinates of the spatial obstacle points with the environmental three-dimensional coordinates of each particle by using a likelihood field model, and obtain the matching score of each particle.

With respect to the device in the above embodiments, the specific manners in which the modules perform operations have been described in detail in the method embodiments, which will not be elaborated herein.

The present disclosure also provides a device for obtaining localization information, which includes a processor and a memory for storing instructions executable by the processor. The processor is configured to implement operations of any method for obtaining localization information in the above-mentioned embodiments. In an implementation, the processor may implement the functions of the obtaining module 801, the obstacle point coordinate calculation module 802, the environmental coordinate calculation module 803 and the scan matching module 804.

FIG. 9 is a block diagram illustrating a device 900 for obtaining localization information according to an exemplary embodiment of the disclosure. For example, the device 900 may be a mobile phone, a computer, a digital broadcasting terminal, a messaging device, a gaming console, a tablet, a medical device, exercise equipment, a personal digital assistant or the like.

Referring to FIG. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations and recording operations. The processing component 902 may include one or more processors 920 to execute instructions to perform all or part of the steps in the abovementioned methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any application or method operated on the device 900, contact data, phonebook data, messages, pictures, videos, etc. The memory 904 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM) , a magnetic memory, a flash memory, a magnetic or optical disk.

The power component 906 provides power to various components of the device 900. The power component 906 may include a power management system, one or more power sources, and any other components associated with generation, management and distribution of power for the device 900.

The multimedia component 908 includes a screen providing an output interface between the device 900 and a user. In some embodiments of the disclosure, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and pressure associated with the touch or swipe action. In some embodiments of the disclosure, the multimedia component 908 includes a front camera and/or a rear camera. The front camera and/or the rear camera may receive external multimedia data when the device 900 is in an operation mode, such as a photographing mode or a video mode. Each of the front camera and the rear camera may be a fixed optical lens system or have focusing and optical zooming capability.

The audio component 910 is configured to output and/or input audio signals. For example, the audio component 910 includes a microphone (MIC) configured to receive an external audio signal when the device 900 is in an operation mode, such as a call mode, a recording mode, and a voice recognition mode. The received audio signal may be further stored in the memory 904 or transmitted via the communication component 916. In some embodiments of the disclosure, the audio component 910 further includes a speaker to output audio signals.

The I/O interface 912 provides an interface between the processing component 902 and peripheral interface modules, and the peripheral interface module may be a keyboard, a click wheel, buttons, and the like. The button may include, but are not limited to, a home button, a volume button, a starting button, and a locking button.

The sensor component 914 includes one or more sensors to provide status assessments of various aspects of the device 900. For instance, the sensor component 914 may detect an on/off status of the device 900 and relative positioning of components, such as a display and small keyboard of the device 900, and the sensor component 914 may further detect a change in a position of the device 900 or a component of the device 900, presence or absence of contact between the user and the device 900, orientation or acceleration/deceleration of the device 900 and a change in temperature of the device 900. The sensor component 914 may include a P-sensor configured to detect presence of an object nearby without any physical contact. The sensor component 914 may also include a light sensor, such as a Complementary Metal Oxide Semiconductor (CMOS) or Charge Coupled Device (CCD) image sensor, configured for use in an imaging application. In some embodiments, the sensor component 914 may also include an acceleration sensor, a gyroscope sensor, a magnetic sensor, a pressure sensor or a temperature sensor.

The communication component 916 is configured to facilitate wired or wireless communication between the device 900 and other equipment. The device 900 may access a communication-standard-based wireless network, such as a Wireless Fidelity (Wi-Fi) network, a 2nd-Generation (2G) or 3rd-Generation (3G) network or a combination thereof. In an exemplary embodiment, the communication component 916 receives a broadcast signal or broadcast associated information from an external broadcast management system through a broadcast channel. In an exemplary embodiment, the communication component 916 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology or another technology.

In exemplary embodiments, the device 900 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In an exemplary embodiment of the disclosure, there is also provided a non-transitory computer-readable storage medium including an instruction, such as the memory 904 including an instruction, and the instruction may be executed by the processor 920 of the device 900 to implement the abovementioned methods. For example, the non-transitory computer-readable storage medium may be a ROM, Random Access Memory (RAM), a Compact Disc Read-Only Memory (CD-ROM), a magnetic tape, a floppy disc, an optical data storage device and the like.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

The present disclosure also provides a non-transitory computer-readable storage medium. An instruction in the storage medium may be executed by a processor of a terminal to enable the terminal to implement a method for obtaining localization information. The method includes: obtaining image information and related information of the image information, wherein the related information includes a depth map, a point cloud map, relocation postures and a relocation variance after relocation; obtaining three-dimensional coordinates of spatial obstacle points based on the depth map; obtaining target postures and environmental three-dimensional coordinates corresponding to each of the target postures based on the relocation postures, the relocation variance and the point cloud map; scanning and matching the three-dimensional coordinates of the spatial obstacle points with the environmental three-dimensional coordinates to obtain matching result information; and obtaining localization information based on the relocation postures and the relocation variance when the matching result information satisfies a predetermined condition.

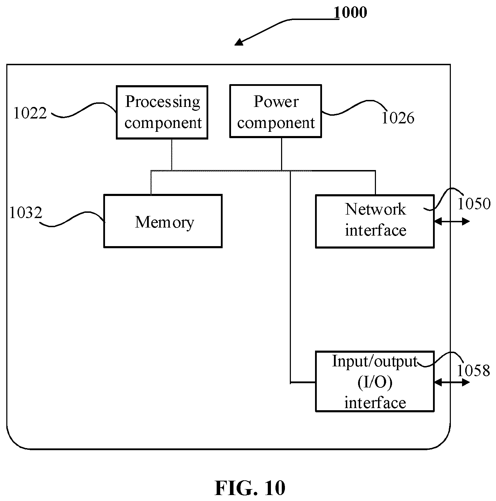

FIG. 10 is a block diagram illustrating a device 1000 for obtaining localization information according to an exemplary embodiment of the disclosure. For example, the device 1000 may be a server. Referring to FIG. 10, the device 1000 includes a processing component 1022, which further includes one or more processor and memory resource represented by a memory 1032 for storing instructions executable by the processing component 1022, such as an application program. The application program stored in the memory 1032 may include one or more modules, and each of those modules corresponds to a set of instructions. In addition, the processing component 1022 is configured to execute the instructions to implement the above method, which includes: obtaining image information and related information of the image information, wherein the related information includes a depth map, a point cloud map, relocation postures and a relocation variance after relocation; obtaining three-dimensional coordinates of spatial obstacle points based on the depth map; obtaining target postures and environmental three-dimensional coordinates corresponding to each of the target postures based on the relocation postures, the relocation variance and the point cloud map; scanning and matching the three-dimensional coordinates of the spatial obstacle points with the environmental three-dimensional coordinates to obtain matching result information; and obtaining localization information based on the relocation postures and the relocation variance when the matching result information satisfies a predetermined condition.

The device 1000 may also include a power component 1026 configured to perform power management of the device 1000, a wired or wireless network interface 1050 configured to connect the device 1000 to a network, and an input/output (I/O) interface 1058. The device 1000 may operate based on an operating system stored in the memory 1032, such as Windows ServerTM, Mac OS XTM, UnixTM, LinuxTM, FreeBSDTM or the like.

Other embodiments of the present disclosure will be apparent to those skilled in the art from consideration of the specification and practice of the present disclosure. This present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for obtaining localization information, applied to a visual localization system including a relocation module, the method comprising:
obtaining (201) image information of an image and related information of the image information from the relocation module, wherein the related information comprises: a depth map, a point cloud map, relocation postures and a relocation variance after relocation;
obtaining (202) three-dimensional coordinates of spatial obstacle points based on the depth map;
obtaining (203) target postures and environmental three-dimensional coordinates corresponding to each of the target postures based on the relocation postures, the relocation variance and the point cloud map;
scanning and matching (204) the three-dimensional coordinates of the spatial obstacle points with the environmental three-dimensional coordinates to obtain matching result information;
obtaining (205), if the matching result information satisfies a predetermined condition, localization information based on the relocation postures and the relocation variance; and
if the matching result information does not satisfy the predetermined condition, determining that the relocation postures are wrong;
**characterized by** obtaining (203) target postures and environmental three-dimensional coordinates corresponding to each of the target postures based on the relocation postures, the relocation variance and the point cloud map comprises:
obtaining (401) a probability density of Gaussian probability distribution based on the relocation postures and the relocation variance;
sampling (402) the relocation postures to obtain a particle set according to the probability density of Gaussian probability distribution, wherein each particle in the particle set corresponds to one of the target postures; and
obtaining (403) environmental three-dimensional coordinates of each particle by a ray casting algorithm based on the point cloud map, wherein the environmental three-dimensional coordinates corresponding to each of the target postures are environmental three-dimensional coordinates of the particle corresponding to the target posture.

2. The method according to claim 1, wherein scanning and matching (204) the three-dimensional coordinates of the spatial obstacle points with the environmental three-dimensional coordinates to obtain the matching result information and obtaining (205) localization information based on the relocation postures and the relocation variance when the matching result information satisfies a predetermined condition comprises:
obtaining (501) a matching score of each particle by scanning and matching the three-dimensional coordinates of the spatial obstacle points with the environmental three-dimensional coordinates of each particle; and
determining (502), when a highest matching score is greater than a predetermined threshold, the relocation postures as a localization result.

3. The method according to claim 2, wherein obtaining (501) the matching score of each particle by scanning and matching the three-dimensional coordinates of the spatial obstacle points with the environmental three-dimensional coordinates of each particle comprises:
scanning and matching (601) the three-dimensional coordinates of the spatial obstacle points with the environmental three-dimensional coordinates of each particle by using a likelihood field model; and
obtaining the matching score of each particle.

4. A device for obtaining localization information, applied to a visual localization system including a relocation module, the device comprising:
an obtaining module (801), configured to obtain image information of an image and related information of the image information from the relocation module, wherein the related information comprises: a depth map, a point cloud map, relocation postures and a relocation variance after relocation;
an obstacle point coordinate calculation module (802), configured to obtain three-dimensional coordinates of spatial obstacle points based on the depth map;
an environmental coordinate calculation module (803), configured to obtain target postures and environmental three-dimensional coordinates corresponding to each of the target postures based on the relocation postures, the relocation variance and the point cloud map;
a scan matching module (804), configured to scan and match the three-dimensional coordinates of the spatial obstacle points with the environmental three-dimensional coordinates to obtain matching result information, obtain localization information based on the relocation postures and the relocation variance if the matching result information satisfies a predetermined condition, and determine that the relocation postures are wrong if the matching result information does not satisfy the predetermined condition;
**characterized in that** the environmental coordinate calculation module (803) is further configured to:
obtain a probability density of Gaussian probability distribution based on the relocation postures and the relocation variance;
sample the relocation postures to obtain a particle set according to the probability density of Gaussian probability distribution, wherein each particle in the particle set corresponds to one of the target postures; and
obtain environmental three-dimensional coordinates of each particle by a ray casting algorithm based on the point cloud map, wherein the environmental three-dimensional coordinates corresponding to each of the target postures are environmental three-dimensional coordinates of the particle corresponding to the target posture.

5. The device according to claim 4, wherein the scan matching module (804) is further configured to:
obtain a matching score of each particle by scanning and matching the three-dimensional coordinates of the spatial obstacle points with the environmental three-dimensional coordinates of each particle; and
determine, when the highest matching score is greater than a predetermined threshold, the relocation postures as a localization result.

6. The device according to claim 5, wherein the scan matching module (804) is further configured to:
scan and match the three-dimensional coordinates of the spatial obstacle points with the environmental three-dimensional coordinates of each particle by using a likelihood field model; and
obtain the matching score of each particle.

7. A device for obtaining localization information, comprising:
a processor; and
a memory for storing instructions executable by the processor;
wherein the processor is configured to implement the method for obtaining localization information according to any one of claims 1-3.

8. A non-transitory computer-readable storage medium having stored thereon instructions that, when executed by a processor of a terminal, cause the terminal to implement a method for obtaining localization information according to any one of claims 1-3.

## Patentansprüche

1. Verfahren zum Gewinnen von Lokalisierungsinformationen, angewandt auf ein visuelles Lokalisierungssystem mit einem Positionsänderungsmodul, wobei das Verfahren die folgenden Schritte aufweist:
Erfassen (201) von Bildinformationen eines Bildes und zugehörigen Informationen der Bildinformationen von dem Positionsänderungsmodul, wobei die zugehörigen Informationen aufweisen: eine Tiefenkarte, eine Punktwolkenkarte, Positionsänderungslagen und eine Positionsänderungsvarianz nach einer Positionsänderung;
Erfassen (202) dreidimensionaler Koordinaten räumlicher Hindernispunkte basierend auf der Tiefenkarte;
Erfassen (203) von Ziellagen und jeder der Ziellagen entsprechender dreidimensionaler Umweltkoordinaten basierend auf den Positionsänderungslagen, der Positionsänderungsvarianz und der Punktwolkenkarte;
Abtasten und Abgleichen (204) der dreidimensionalen Koordinaten der räumlichen Hindernispunkte mit den dreidimensionalen Umgebungskoordinaten, um Abgleichergebnisinformationen zu erfassen;
Erfassen (205), wenn die Abgleichergebnisinformationen eine vorbestimmte Bedingung erfüllen, von Lokalisierungsinformationen basierend auf den Positionsänderungslagen und der Positionsänderungsvarianz; und
wenn die Abgleichergebnisinformationen die vorbestimmte Bedingung nicht erfüllen, Feststellen, dass die Positionsänderungslagen falsch sind;
**dadurch gekennzeichnet, dass** das Erfassen (203) von Ziellagen und dreidimensionalen Umgebungskoordinaten, die jeder der Ziellagen entsprechen, basierend auf den Positionsänderungslagen, der Positionsänderungsvarianz und der Punktwolkenkarte die folgenden Schritte aufweist:
Erfassen (401) einer Wahrscheinlichkeitsdichte einer Gauss'schen Wahrscheinlichkeitsverteilung basierend auf den Positionsänderungslagen und der Positionsänderungsvarianz;
Abtasten (402) der Positionsänderungslagen, um ein Partikelset gemäß der Wahrscheinlichkeitsdichte der Gauss'schen Wahrscheinlichkeitsverteilung zu erfassen, wobei jedes Partikel in dem Partikelset einer der Ziellagen entspricht; und
Erfassen (403) von dreidimensionalen Umgebungskoordinaten jedes Partikels durch einen Ray-Casting-Algorithmus basierend auf der Punktwolkenkarte, wobei die jeder der Ziellagen entsprechenden dreidimensionalen Umgebungskoordinaten dreidimensionale Umgebungskoordinaten des der Ziellage entsprechenden Partikels sind.

2. Verfahren nach Anspruch 1, bei welchem das Abtasten und Abgleichen (204) der dreidimensionalen Koordinaten der räumlichen Hindernispunkte mit den dreidimensionalen Umgebungskoordinaten, um die Abgleichergebnisinformationen zu erfassen, und das Erfassen (205) von Lokalisierungsinformationen basierend auf den Positionsänderungslagen und der Positionsänderungsvarianz, wenn die Abgleichergebnisinformationen eine vorbestimmte Bedingung erfüllen, die folgenden Schritte aufweist:
Erfassen (501) eines Übereinstimmungswerts jedes Partikels durch Abtasten und Abgleichen der dreidimensionalen Koordinaten der räumlichen Hindernispunkte mit den dreidimensionalen Umgebungskoordinaten jedes Partikels; und
Bestimmen (502) der Positionsänderungslagen als ein Lokalisierungsergebnis, wenn ein höchster Übereinstimmungswert höher als ein vorbestimmter Schwellenwert ist.

3. Verfahren nach Anspruch 2, bei welchem das Erfassen (501) des Übereinstimmungswerts jedes Partikels durch Abtasten und Abgleichen der dreidimensionalen Koordinaten der räumlichen Hindernispunkte mit den dreidimensionalen Umgebungskoordinaten jedes Partikels die folgenden Schritte aufweist:
Abtasten und Abgleichen (601) der dreidimensionalen Koordinaten der räumlichen Hindernispunkte mit den dreidimensionalen Umgebungskoordinaten jedes Partikels unter Verwendung eines Wahrscheinlichkeitsfeldmodells; und
Erfassen des Übereinstimmungswerts jedes Partikels.

4. Vorrichtung zum Erfassen von Lokalisierungsinformationen, angewendet auf ein visuelles Lokalisierungssystem mit einem Positionsänderungsmodul, wobei die Vorrichtung aufweist:
ein Erfassungsmodul (801) das zum Erfassen von Bildinformationen eines Bildes und zugehörigen Informationen der Bildinformationen von dem Positionsänderungsmodul ausgebildet ist, wobei die zugehörigen Informationen aufweisen: eine Tiefenkarte, eine Punktwolkenkarte, Positionsänderungslagen und eine Positionsänderungsvarianz nach einer Positionsänderung;
ein Hindernispunktkoordinatenberechnungsmodul (802), das zum Erfassen dreidimensionaler Koordinaten räumlicher Hindernispunkte basierend auf der Tiefenkarte ausgebildet ist;
ein Umgebungskoordinatenberechnungsmodul (803), das zum Erfassen von Ziellagen und jeder der Ziellagen entsprechenden dreidimensionalen Umweltkoordinaten basierend auf den Positionsänderungslagen, der Positionsänderungsvarianz und der Punktwolkenkarte, ausgebildet ist;
ein Abtast-Abgleichmodul (804), das dazu ausgebildet ist, die dreidimensionalen Koordinaten der räumlichen Hindernispunkte abzutasten und mit den dreidimensionalen Umgebungskoordinaten abzugleichen, um Abgleichergebnisinformationen zu erfassen, Lokalisierungsinformationen basierend auf den Positionsänderungslagen und der Positionsänderungsvarianz zu erfassen, wenn die Abgleichergebnisinformationen eine vorbestimmte Bedingung erfüllen und, wenn die Abgleichergebnisinformationen die vorbestimmte Bedingung nicht erfüllen, festzustellen, dass die Positionsänderungslagen falsch sind;
**dadurch gekennzeichnet, dass** das Umgebungskoordinatenberechnungsmodul (803) ferner dazu ausgebildet ist,
eine Wahrscheinlichkeitsdichte einer Gauss'schen Wahrscheinlichkeitsverteilung basierend auf den Positionsänderungslagen und der Positionsänderungsvarianz zu erfassen;
die Positionsänderungslagen abzutasten, um ein Partikelset gemäß der Wahrscheinlichkeitsdichte der Gauss'schen Wahrscheinlichkeitsverteilung zu erfassen, wobei jedes Partikel in dem Partikelset einer der Ziellagen entspricht; und
dreidimensionale Umgebungskoordinaten jedes Partikels durch einen Ray-Casting-Algorithmus basierend auf der Punktwolkenkarte zu erfassen, wobei die jeder der Ziellagen entsprechenden dreidimensionalen Umgebungskoordinaten dreidimensionale Umgebungskoordinaten des der Ziellage entsprechenden Partikels sind.

5. Vorrichtung nach Anspruch 4, bei welcher das Abtast-Abgleichmodul (804) ferner dazu ausgebildet ist:
einen Übereinstimmungswert jedes Partikels durch Abtasten und Abgleichen der dreidimensionalen Koordinaten der räumlichen Hindernispunkte mit den dreidimensionalen Umgebungskoordinaten jedes Partikels zu erfassen; und
die Positionsänderungslagen als ein Lokalisierungsergebnis zu bestimmen, wenn ein höchster Übereinstimmungswert höher als ein vorbestimmter Schwellenwert ist.

6. Vorrichtung nach Anspruch 5, bei welcher das Abtast-Abgleichmodul (804) ferner dazu ausgebildet ist,
die dreidimensionalen Koordinaten der räumlichen Hindernispunkte abzutasten und mit den dreidimensionalen Umgebungskoordinaten jedes Partikels unter Verwendung eines Wahrscheinlichkeitsfeldmodells abzugleichen; und
den Übereinstimmungswert jedes Partikels zu erhalten.

7. Vorrichtung zum Erfassen von Lokalisierungsinformationen mit:
einem Prozessor; und
einem Speicher zum Speichern von durch den Prozessor ausführbaren Befehlen,
wobei der Prozessor dazu ausgebildet ist, das Verfahren zum Erfassen von Lokalisierungsinformationen nach einem der Ansprüche 1-3 zu implementieren.

8. Nichtflüchtiges computerlesbares Speichermedium, auf welchem Befehle gespeichert sind, welche bei Ausführung durch einen Prozessor eines Endgeräts das Endgerät veranlassen, ein Verfahren zum Erfassen von Lokalisationsinformationen nach einem der Ansprüche 1-3 auszuführen.

## Revendications

1. Procédé d'obtention d'informations de localisation, appliqué à un système de localisation visuelle incluant un module de repositionnement, le procédé comprenant:
l'obtention (201) d'informations d'image d'une image et d'informations associées des informations d'image à partir du module de repositionnement, dans lequel les informations associées comprennent: une carte de profondeur, une carte de nuage de points, des postures de repositionnement et une variance de repositionnement après repositionnement;
l'obtention (202) de coordonnées tridimensionnelles de points d'obstacles spatiaux à partir de la carte de profondeur;
l'obtention (203) de postures cibles et de coordonnées tridimensionnelles environnementales correspondant à chacune des postures cibles à partir des postures de repositionnement, de la variance de repositionnement et de la carte de nuage de points;
la numérisation et la corrélation (204) des coordonnées tridimensionnelles des points d'obstacles spatiaux avec les coordonnées tridimensionnelles environnementales pour obtenir des informations de résultat de corrélation;
l'obtention (205), si les informations de résultat de corrélation satisfont une condition prédéterminée, d'informations de localisation à partir des postures de repositionnement et de la variance de repositionnement; et
si les informations de résultat de corrélation ne satisfont pas la condition prédéterminée, la détermination que les postures de repositionnement sont erronées;
**caractérisé par** l'obtention (203) de postures cibles et de coordonnées tridimensionnelles environnementales correspondant à chacune des postures cibles à partir des postures de repositionnement, de la variance de repositionnement et de la carte de nuage de points comprend:
l'obtention (401) d'une densité de probabilité de distribution de probabilité gaussienne à partir des postures de repositionnement et de la variance de repositionnement;
l'échantillonnage (402) des postures de repositionnement pour obtenir un ensemble de particules selon la densité de probabilité de la distribution de probabilité gaussienne, dans lequel chaque particule dans l'ensemble de particules correspond à l'une des postures cibles; et
l'obtention (403) de coordonnées tridimensionnelles environnementales de chaque particule par un algorithme de lancer de rayons à partir de la carte de nuage de points, dans lequel les coordonnées tridimensionnelles environnementales correspondant à chacune des postures cibles sont des coordonnées tridimensionnelles environnementales de la particule correspondant à la posture cible.

2. Procédé selon la revendication 1, dans lequel la numérisation et la corrélation (204) des coordonnées tridimensionnelles des points d'obstacles spatiaux avec les coordonnées tridimensionnelles environnementales pour obtenir les informations de résultat de corrélation et l'obtention (205) d'informations de localisation à partir des postures de repositionnement et de la variance de repositionnement lorsque les informations de résultat de corrélation satisfont une condition prédéterminée comprend:
l'obtention (501) d'un score de corrélation de chaque particule par numérisation et corrélation des coordonnées tridimensionnelles des points d'obstacles spatiaux avec les coordonnées tridimensionnelles environnementales de chaque particule; et
la détermination (502), lorsqu'un score de corrélation le plus élevé est supérieur à un seuil prédéterminé, des postures de repositionnement comme résultat de localisation.

3. Procédé selon la revendication 2, dans lequel l'obtention (501) du score de corrélation de chaque particule par numérisation et corrélation des coordonnées tridimensionnelles des points d'obstacles spatiaux avec les coordonnées tridimensionnelles environnementales de chaque particule comprend:
la numérisation et la corrélation (601) des coordonnées tridimensionnelles des points d'obstacles spatiaux avec les coordonnées tridimensionnelles environnementales de chaque particule à l'aide d'un modèle de champ de vraisemblance; et
l'obtention du score de corrélation de chaque particule.

4. Dispositif d'obtention d'informations de localisation, appliqué à un système de localisation visuelle incluant un module de repositionnement, le dispositif comprenant:
un module d'obtention (801), configuré pour obtenir des informations d'image d'une image et des informations associées des informations d'image à partir du module de repositionnement, dans lequel les informations associées comprennent: une carte de profondeur, une carte de nuage de points, des postures de repositionnement et une variance de repositionnement après repositionnement;
un module de calcul de coordonnées de points d'obstacles (802), configuré pour obtenir des coordonnées tridimensionnelles de points d'obstacles spatiaux à partir de la carte de profondeur;
un module de calcul de coordonnées environnementales (803), configuré pour obtenir des postures cibles et des coordonnées tridimensionnelles environnementales correspondant à chacune des postures cibles à partir des postures de repositionnement, de la variance de repositionnement et de la carte de nuage de points;
un module de corrélation et de numérisation (804), configuré pour numériser et corréler les coordonnées tridimensionnelles des points d'obstacles spatiaux avec les coordonnées tridimensionnelles environnementales pour obtenir des informations de résultat de corrélation, obtenir des informations de localisation à partir des postures de repositionnement et de la variance de repositionnement si les informations de résultat de corrélation satisfont une condition prédéterminée, et déterminer que les postures de repositionnement sont erronées si les informations de résultat de corrélation ne satisfont pas la condition prédéterminée;
**caractérisé en ce que** le module de calcul de coordonnées environnementales (803) est configuré en outre pour:
obtenir une densité de probabilité de distribution de probabilité gaussienne à partir des postures de repositionnement et de la variance de repositionnement;
échantillonner les postures de repositionnement pour obtenir un ensemble de particules selon la densité de probabilité de distribution de probabilité gaussienne, dans lequel chaque particule dans l'ensemble de particules correspond à l'une des postures cibles; et
obtenir des coordonnées tridimensionnelles environnementales de chaque particule par un algorithme de lancer de rayons à partir de la carte de nuage de points, dans lequel les coordonnées tridimensionnelles environnementales correspondant à chacune des postures cibles sont des coordonnées tridimensionnelles environnementales de la particule correspondant à la posture cible.

5. Dispositif selon la revendication 4, dans lequel le module de corrélation et de numérisation (804) est configuré en outre pour:
obtenir un score de corrélation de chaque particule par numérisation et corrélation des coordonnées tridimensionnelles des points d'obstacles spatiaux avec les coordonnées tridimensionnelles environnementales de chaque particule; et
déterminer, lorsque le score de corrélation le plus élevé est supérieur à un seuil prédéterminé, les postures de repositionnement comme résultat de localisation.

6. Dispositif selon la revendication 5, dans lequel le module de corrélation et de numérisation (804) est configuré en outre pour:
numériser et corréler les coordonnées tridimensionnelles des points d'obstacles spatiaux avec les coordonnées tridimensionnelles environnementales de chaque particule à l'aide d'un modèle de champ de vraisemblance;
et
obtenir le score de corrélation de chaque particule.

7. Dispositif d'obtention d'informations de localisation, comprenant:
un processeur; et
une mémoire pour stocker des instructions exécutables par le processeur;
dans lequel le processeur est configuré pour mettre en œuvre le procédé d'obtention d'informations de localisation selon l'une quelconque des revendications 1 à 3.

8. Support de stockage lisible par ordinateur non transitoire sur lequel sont stockées des instructions qui, lorsqu'elles sont exécutées par un processeur d'un terminal, amènent le terminal à mettre en œuvre un procédé d'obtention d'informations de localisation selon l'une quelconque des revendications 1 à 3.
